# EUROPEAN PATENT SPECIFICATION

(11) **EP 3 382 292 B1**
(45) Date of publication and mention of the grant of the patent: **29.04.2026**
(21) Application number: 17164194.7
(22) Date of filing: 31.03.2017
(51) Int. Cl.: F24F 5/00, F24D 11/02, F28D 21/00

(54) **HEATING SYSTEM AND HEATING METHOD**
HEIZSYSTEM UND HEIZVERFAHREN
SYSTÈME ET PROCÉDÉ DE CHAUFFAGE

(43) Date of publication of application: 03.10.2018
(73) Proprietor: Mitsubishi Electric Corporation, Tokyo 100-8310 (JP)
(72) Inventor: KAWALEY, Georgeanna, Livingston, EH54 5DJ (GB); McDONALD, Gordon, Livingston, EH54 5DJ (GB)
(74) Representative: Pfenning, Meinig & Partner mbB

(56) References cited:
- EP-A2- 1 455 156
- DE-A1- 102015 207 079

## Description

The present invention relates to a heating system and a heating method.

Current operation of heating systems having, as a heat source, a heat pump or a boiler and having, as a heat emitter, a fan coil unit or radiator results in long necessary running times of the heat source and overheating of the space in which the heat emitter is installed. Ultimately, this results in a waste of energy.

EP 1455 156 A2 describes a room tempering system having an air/phase change material heat exchanger and a heat-transfer-medium/air heat exchanger. Both heat exchangers are used to temperate air flowing in the system.

DE 10 2015 207 079 A1 describes a heating system having a heat source, a heat drain and a latent heat storage. The storing and emission of heat is controlled by two pumps.

It is therefore an objective of the present invention to eliminate these disadvantages. It is especially also an objective of the present invention to improve the heating operation and its control.

The present invention is described in the independent claims. Advantageous alternatives and options which can be realized, but which are not necessarily to be realized, are described in the dependent claims.

A basic idea of the present invention is to provide a means of storing excess heat for use at a later stage (and/or at a later time), wherein this means of storing excess heat comprises a phase change material, hereinafter abbreviated as PCM. It is also a basic idea of the present invention to provide a control for different states for the PCM.

A heating system according to the invention is described in claim 1.

Therein, being in one of the states (enumerated in this claim) feed state, emission state and transport state and/or changing from one of these enumerated states to another one of these states does not necessarily mean (but can also mean) that all of the heat is flowing in accordance with the respective state. That is, part of the heat (even most of the heat) can also flow in accordance with another one of the enumerated states (or even in accordance with a different state not being enumerated) if the system is controlled so as to be in one of the enumerated states. For example, when intending to heat the first space, part of the heat coming from the heat source can be conveyed to the first space in order to increase the temperature therein, whereas already then another part of the heat coming from the heat source can be fed concurrently to the PCM to be stored in the latter. "Between" means that a change between states can be performed in both directions, for example from the emission state to the feed state and vice versa.

The heat-transfer-medium can be water. The meaning of heat-transfer-medium/air (especially: water/air) heat exchanger is that heat can be transferred from a heat-transfer-medium (especially: water) to air and vice versa. The meaning of heat-transfer-medium/PCM (especially: water/PCM) heat exchanger is that heat can be transferred from a heat-transfer-medium (especially: water) to a PCM and vice versa.

Dependent upon its current state, the heat emitting mechanism (that is, the heat-transfer-medium/air heat exchanger thereof and/or the heat storage and release mechanism thereof) can be adapted to emit heat into the first space. The first space is preferably a (first) room inside a building, inside which room preferably not only the heat storage and release mechanism, but also the complete heating mechanism (that is, the heat-transfer-medium/air heat exchanger as well as the heat storage and release mechanism) is located or arranged.

The controlling of the heating system, especially of the heat storage and release mechanism thereof, may be realized in computer implemented form and/or based on a central control unit of the heating system. This central control unit may be a computer or a microcontroller having a memory (adapted to store adequate control programs) and a microprocessor. Advantageously, controlling means regulating. The controlling/regulating of the heating system, especially of the heat storage and release mechanism thereof, may be realized as a switching of the heat storage and release mechanism in between said (at least) three states (that is, the feed state, the emission state and the transport state), that is from an arbitrary one of these states into another arbitrary one of these states.

Features that can be advantageously realized (that is, which do not have to be realized) are described in claim 2.

Also here, "between" means that a change can be performed in both directions.

Further features that can be advantageously realized are described in claim 3.

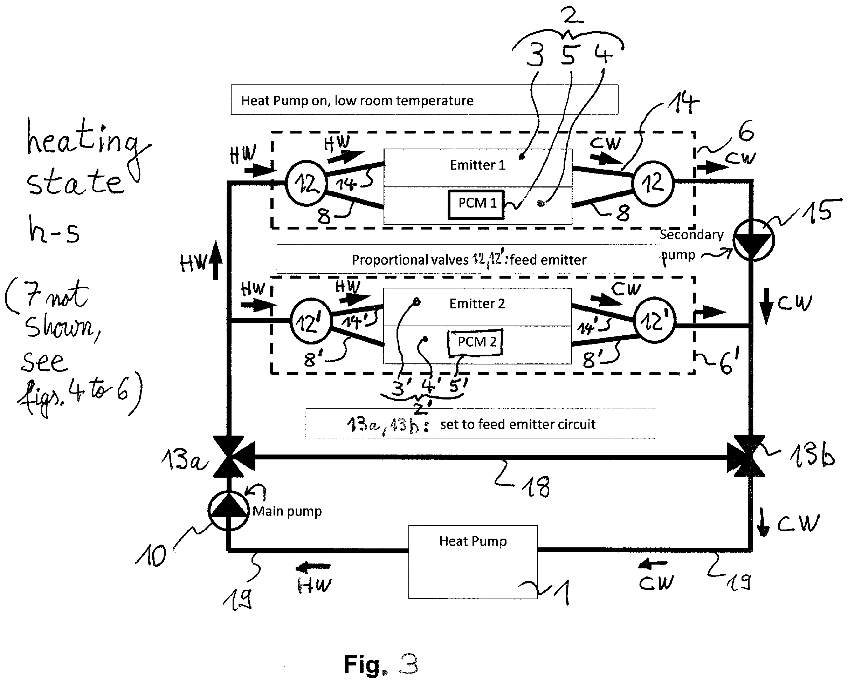

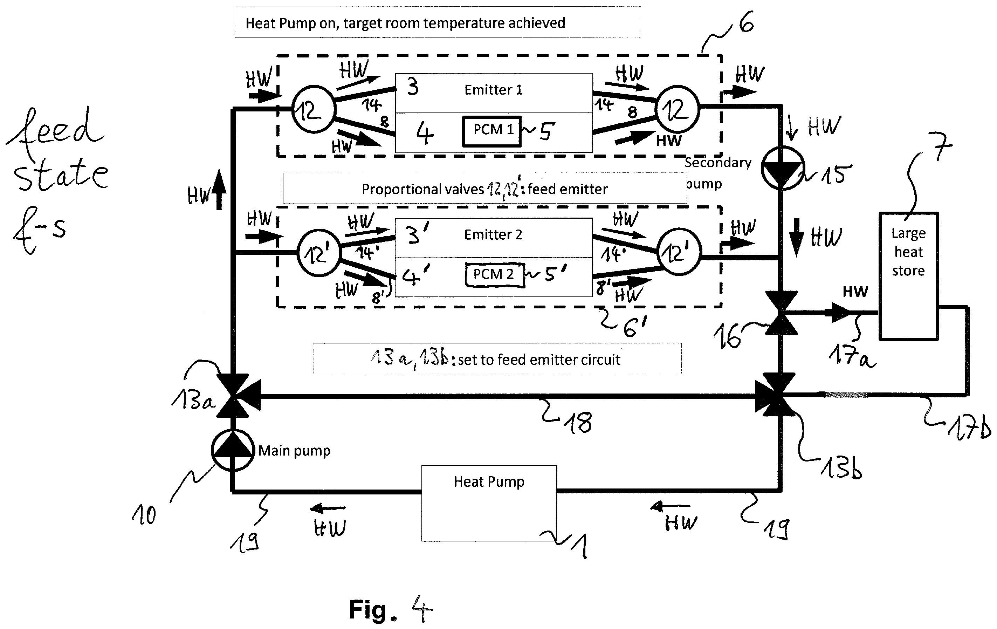

This change can be seen when comparing Figures 3 and 4 (see specific description of embodiments hereinafter).

Further features which can be advantageously realized are described in claim 4.

The aim of the features described in this claim is to avoid that the target temperature becomes too high in the first space being the target.

Further advantageous features are described in claim 5.

The heat-transfer-medium line can be a water-line in case of water being the heat-transfer-medium.

Further advantageous features are described in claim 6.

Further advantageous features are described in claim 7.

In this respect, please compare Figures 3 and 4, on the one hand, with Figure 5, on the other hand (these Figures being described in detail hereinafter). Preferably, these state changes can be established based on two, three or more valves, preferably two, three or more three-way-valves. In a preferred embodiment, exactly two three-way-valves are used in order to realize the features of this claim.

Further advantageous features are described in claim 8.

Preferably, again, the heat-transfer-medium is water.

Further advantageous features which can be realized are described in claims 9 to 13 (the features of each single one of these claims can be realized solely in conjunction with the features as described in the other claims or can be realized in arbitrary combinations together with the features of the other claims).

Further advantageous features are described in claim 13.

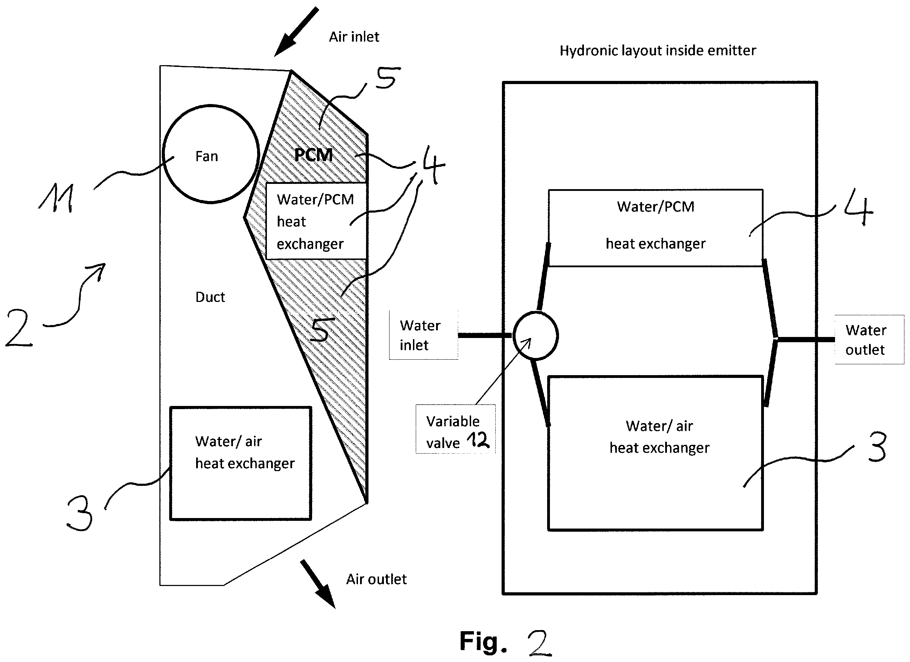

Therein, for the fluid-connection of the several heat emitting mechanisms arranged in parallel, please see Figures 2 to 6 and Figure 8 described in detail hereinafter.

Finally, further advantageous features are described in claim 14.

A heating method according to the invention is described in claim 15.

According to the invention, to improve the heating operation and prevent overheating of a space (the first space) by the heat source which equates to energy consumption, empty spaces within heat emitters can be filled with a phase change material (PCM). This phase change material in effect provides a heat storage medium thereby allowing for prolonged heating but with shorter heating and cooling operation cycles of the heat source. The PCM can be regulated to transport heat to a space adapted to store heat, that is a (central) thermal store, or elsewhere to prevent further release of heat into a space (first space) in which the target temperature has already been achieved; thereby minimizing waste of heat and of energy, respectively.

A hot/cold water circuit, a heat exchanger, and a fan can be combined in order to supply heat and a thermal storage unit which can be composed of a PCM and a heat exchanger can be installed inside the chassis of a heat emitter. The thermal storage unit inside the chassis can supply heat to a room by transferring heat to air by an air flow provided by a fan.

The PCM can be encapsulated and fitted in the empty space found within the heat emitter. The design and size of encapsulated material will be determined by the heat emitter in use. The PCM in this case can be an encapsulated paraffin or a salt hydrate with a melting temperature between 30°C and 40°C.

During normal operation of a heat pump, a target room temperature (hereinafter abbreviated as Tₙ) can be set so as to be achieved by transfer of warm air from the heat emitter to the space/room in question. This target temperature is often surpassed (Tᵣₒₒₘ > Tₙ), meaning that excess heat enters the room/space to be heated. In the presence of the PCM, this excess heat can be diverted to the PCM for storage thereof, for example via operation of proportional valves, whereby an amount of water flowing in the emitter circuit is reduced and an amount of water flowing to the PCM is increased. A temperature sensor can be used to confirm when Tᵣₒₒₘ = Tₙ has been achieved (i.e. when Tₙ has been attained inside the first room/space) and to trigger the proportional valve(s) to divert water flow to the PCM. The proportion of diversion can be based on sensing of the temperature maintained in the space/room to be heated in the first instance.

When the target temperature in the first space/room is reached and maintained (Tᵣₒₒₘ = Tₙ = constant), the heat pump can go off. The water can be pumped to a second emitter in a second room/space. The second room is heated and when the target temperature is reached and maintained therein, the heat can then be moved further through the PCM to another and/or next room.

Thus, the PCM can be regulated and can be integrated in a thermal storage network.

In the case where two supply and return pipes are employed, heat stored in the PCM (which can comprise several PCM entities) can be moved around (especially: circulated) independently. For example, when heat supplied to the first room reaches the target temperature (Tᵣₒₒₘ = Tₙ), and heat supplied to the second room is insufficient (Tᵣₒₒₘ < Tₙ) as determined by one or more temperature sensor(s), heat stored in the thermal storage unit inside the emitter in the first room can be released via a cold water supply to the circuit. Released heat can then be supplied to the second room via a PCM inside an emitter in the second room. The amount of heat released to the second room can be increased by releasing heat stored in a/the PCM.

When no further space heating is required, heat stored in the PCM can be transported to a large thermal store, for example a water tank, using cold water. (Cold water can be passed through the PCM, resulting in warm water being delivered to the large thermal store, e.g. the water tank, and being stored therein.)
Alternatively, second heat exchange pipes to heat PCM from within can be used. A variable valve (such as a proportional valve) to regulate flows can be added in each heat exchanger ("HEX"). This allows a very good control of heat emitted to a room, as the PCM can be charged (heated) while the room remains at steady temperature. When the heating is turned off, the PCM allows radiating heat into the room. The PCM can be heated by water after room heating; valves can be manual or automated (e.g. proportional valves).

In another alternative ("secondary pump"), (a) small pump(s) can be used to move water through the PCM and an air HEX to give boosted heat output from the PCM. (A) valve(s) can be used to stop a remainder of circuit water from flowing through the emitter. This can be done independently of the heat pump being once charged: the space is heated while the heat pump is switched off.

Also, the same operating principles can be applied to a domestic hot water tank where the PCM is contained between the double layer of the tank body. For example: While the heat pump is running in hot water heating mode, the tank water can be heated to a maximum temperature of 60°C during which time, the PCM can store heat. When the heat pump is switched off, the tank will gradually start to cool, but a higher water temperature will be maintained for longer periods due to heat given off by the PCM.

Hereinafter, the present invention is described based on specific embodiments. The figures show the following.

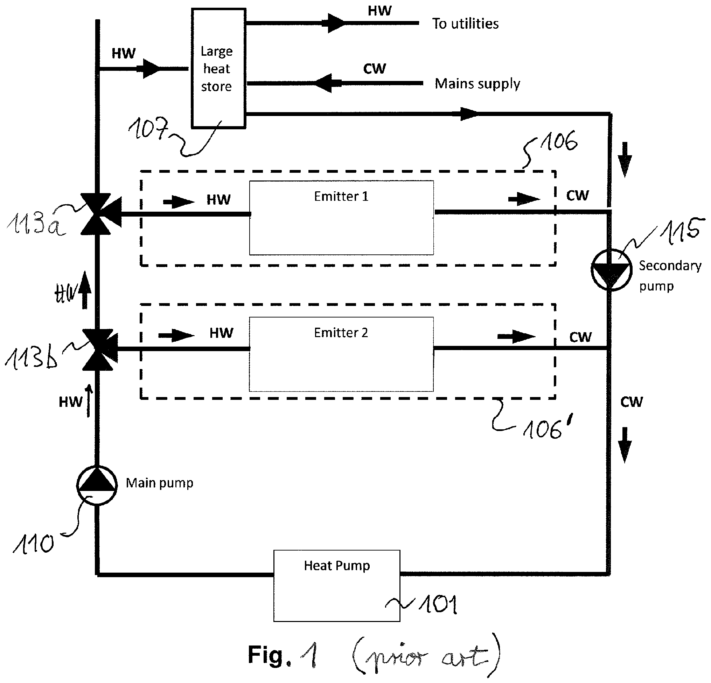

Figure 1 a prior art heating system.
Figure 2 the principle layout for a heating system according to the invention.
Figures 3 to 6 a first embodiment for a heating system according to the invention being in different states.

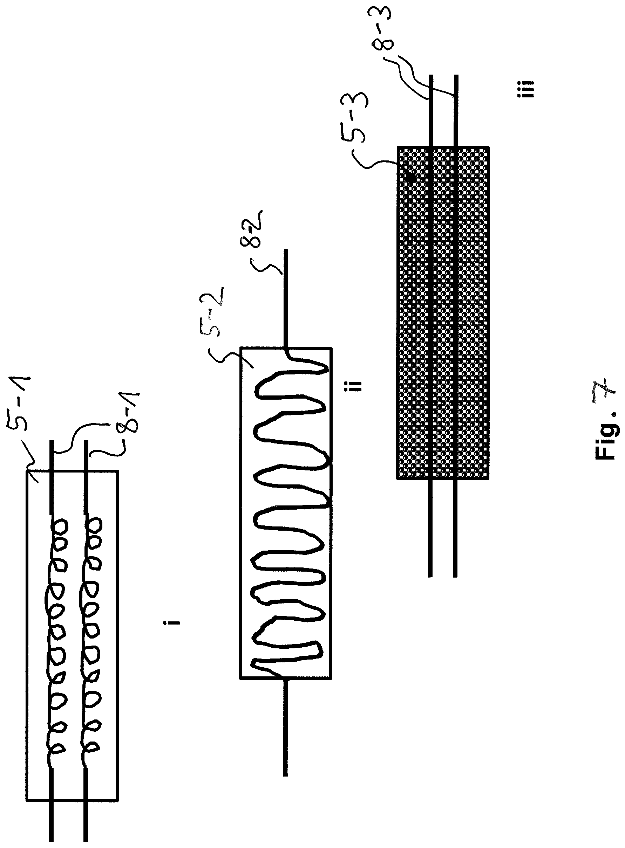

Figure 7 three different layouts for a PCM which can be used in the present invention.

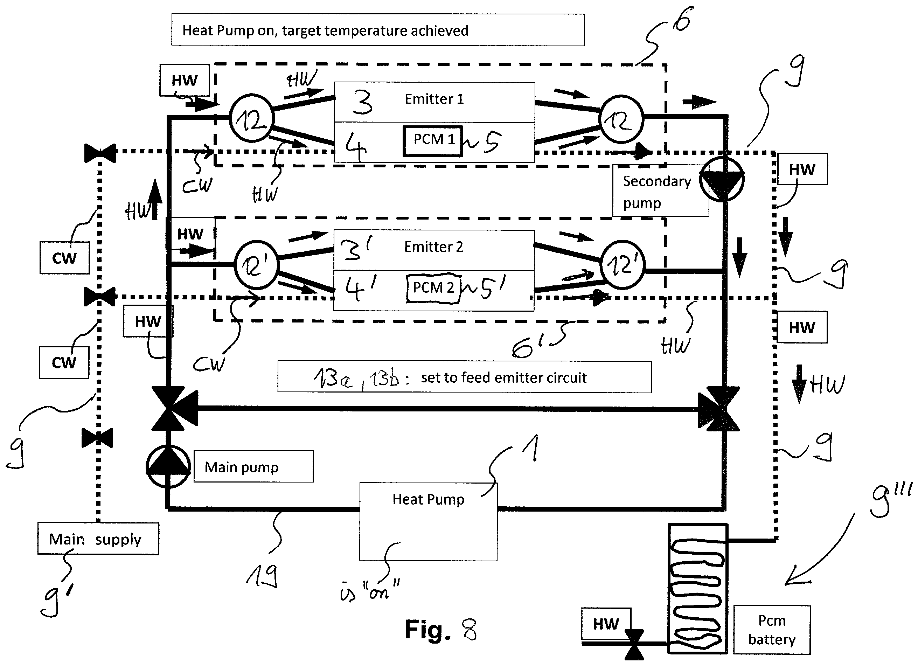

Figure 8 a second embodiment for a heating system according to the present invention.

According to Figure 1 (prior art), a heat pump 101 is connected via a main pump 110 to a large heat store such as a tank 107. The store 107 is connected via a secondary pump 115 to the heat pump 101. Consequently, components 101, 110, 107 and 115 are connected in a closed circuit. Here (and also in the embodiments according to the invention described hereinafter) "connected" means fluid-connected, that is, a fluid connection (for example by a fluid line connecting respective components) is established between the respective components.

In Figure 1, in the fluid line between the main pump 110 and the heat store 107, there are two three-way-valves 113b and 113a connected in series. One port of valve 113b is connected via an emitter ("Emitter 2") to the fluid line between the secondary pump 115 and the heat pump 101. One port of valve 113a (being arranged between valve 113b and heat store 107) is connected via another emitter ("Emitter 1") to the fluid line between heat store 107 and secondary pump 115. The "Emitter 1" is located inside a first room 106, and the " Emitter 2" is located inside a second room 106' being different from the first room 106.

Consequently, the "Emitter 2" in room 106', the "Emitter 1" in room 106 and the large heat store 107 are respectively fluid-connected in parallel and can be fed (if main pump 110 is running) from heat pump 101. Arrows in Figure 1 (the same also holds for the subsequent Figures 2 to 8 showing the invention) show the current flow of heat-transfer-medium (which is water in Figures 1 to 8) according to the current state of the shown system. Therein "HW" stands for "hot water" and "CW" stands for "cold water" (the same abbreviations are also used in Figures 2 to 8).

A similar state of the art is "Thermo-economic and primary-energy-factor assessment based on the field test of an air-to-water heat pump" by P. Poredos, T. Coz, A. Kitanovski and A. Poredos, in: International Journal of Refrigeration (2017), http://dx.doi.org/doi:10.1016/j.ijrefrig.2017.02.003.

Figure 2 shows the basic concept of the present invention. According to Figure 2, left side, the heat emitting mechanism 2 comprises a water/air heat exchanger 3 and a heat storage and release mechanism 4 which is configured as a water/PCM heat exchanger and therefore includes a phase change material PCM 5. The heat emitting mechanism 2 further comprises an air-conveying-device 11, which is a fan. The components 3, 4 (with 5) and 11 are arranged inside a single housing having an air inlet, a duct and an air outlet (see arrows). The heat emitting mechanism 2 and the housing thereof, resp., allows air to flow through the air inlet inside the housing, therein to fan 11, on the downstream side of fan 11 through the duct, on the downstream side of the duct through the component 3 and on the downstream side of thereof 3 to the air outlet, where the air leaves the housing. The speed of the fan 11 can be manipulated, i.e. varied. An empty space is used to place PCM 5. The surface area between the transport fluid (water) and PCM 5 is maximized. A PCM 5 with high thermal conductivity is used.

The basic concept of the hydronic layout inside the emitting mechanism 2 ("hydronic layout inside the emitter") 2 is shown on the right side of Figure 2. Inflowing water is conveyed to a variable valve 12 such as a proportional valve. Valve 12 allows variable amounts of inflowing water to flow, on the one hand, through water/PCM heat exchanger 4 and, on the other hand, through water/air heat exchanger 3. Both aforementioned amounts of water are then re-unified at a water outlet. That is, the inflowing total amount of water is divided into two partial amounts of water, the first partial amount of water flowing through water/PCM heat exchanger 4 and the second partial amount of water flowing through water/air heat exchanger 3. The ratio of these two amounts is freely variable according to the setting of variable valve 12 between 100% of the total amount of water flowing through water/PCM heat exchanger 4 and 100% of the total amount of water flowing through water/air heat exchanger 3.

Figures 3 to 6 show a first embodiment of a heating system according to the invention. Same reference signs in Figures 3 to 6 (and also in Fig. 2) relate to the same entities and components, respectively (for clarity reasons, components 16, 17a, 7, 17b are not shown in Figure 3 - however, please compare Figures 4 to 6).

The system layout of this first embodiment is as follows.

A heat pump 1 is connected (via a first port of it) to a first three-way-valve 13a via a water line 19. In water line 19, between heat pump 1 and first valve 13a, main pump 10 is located. That is, one port of valve 13a is connected to main pump 10. Another port of valve 13a is connected via a water line 18 and one port of a second three-way-valve 13b to the latter. Another port of valve 13b is connected via water line 19 and via a second port of the heat pump 1 to the latter. Still another port of valve 13a is connected to still another port of valve 13b via two heat emitting mechanisms 2 and 2' which are fluid-connected in parallel to each other. That is, the fluid connection between the two valves 13a and 13b via water line 18, the fluid connection between the two valves 13a and 13b via the second heat emitting mechanism 2', and the fluid connection between the two valves 13a and 13b via the first heat emitting mechanism 2 constitute three fluid-connections which are arranged in parallel to each other.

The first heat emitting mechanism 2 comprises a first emitter ("Emitter 1") 3 and a first water/PCM heat exchanger 4 (the latter including an area being filled with a phase change material "PCM 1" being depicted with reference sign 5). The second heat emitting mechanism 2' comprises a second emitter ("Emitter 2") 3' and a second water/PCM heat exchanger 4' (the latter including an area being filled with a phase change material "PCM 2" being depicted with reference sign 5').

At each of the heat emitting mechanisms 2 and 2', the respective water/air heat exchanger 3, 3' and the respective water/PCM heat exchanger 4, 4' are fluid-connected in parallel. This is done in the following manner: The output port of valve 13a being fluid-connected with the two heat emitting mechanisms 2, 2' is, firstly, connected to a proportional valve 12 which branches into two water lines 8 and 14, namely a PCM throughflow line 8 (being connected to component 4) and an emitter throughflow line 14 (being connected to component 3). Having gone through the PCM 5 (in component 4) and the emitter 3, respectively, the two lines 8, 14 re-unify (seen from the aforementioned proportional valve 12 shown on the left side of Fig. 3) into another proportional valve 12 (shown on the right side of Fig. 3) which is connected via a secondary pump 15 to valve 13b. That is, line 14 connects the two aforementioned proportional valves 12 by passing through emitter 3, whereas line 8 passing through water/PCM heat exchanger 4 (and through PCM 5 thereof) also fluid-connects the aforementioned two proportional valves 12 in parallel to line 14. In other words, components 4 and 5, on the one hand, and component 3, on the other hand, are fluid-connected in parallel between two proportional valves 12.

The same holds for components (elements) 3', 4' and 5', that is for the second heat emitting mechanism 2'. Proportional valve 12' (left side of Fig. 3) branches into two lines 8' and 14', wherein line 8' allows a throughflow through elements 4' and 5' and wherein line 14' allows a throughflow through element 3'. Seen from the aforementioned valve 12' (the one being directly connected to valve 13a and being shown on the left side in Figure 3), the two lines 8' and 14' then re-unify in another three-way-valve 12' (the one shown on the right side in Figure 3 and being directly connected to valve 13b). Therein, secondary pump 15 is located in the fluid connecting line part connecting the valve 12 on the right side of Figure 3 with the three-way-valve 13b. There is a T-junction fluid connecting part as follows: One port of this T-junction connects to valve 12 on the right side of Fig. 3 via secondary pump 15. Another port of the T-junction connects to valve 12' on the right side of Fig. 3. Still another port of the T-junction connects to one of the ports of valve 13b.

The two valves 12, the two lines 8 and 14 and the first heat emitting mechanism 2 (comprising its components 3, 4 and 5) are located in a first room 6 inside a building. The two valves 12', the two lines 8' and 14' and the second heat emitting mechanism 2' (with its components 3', 4' and 5') are located in a second room 6' inside this building.

Finally, as can only be seen in Figures 4 to 6 (but not in Fig. 3), in this first embodiment, in the fluid-connecting line part between the aforementioned T-junction and the port of valve 13b which is connected to this T-junction, another valve 16, hereinafter denoted as bypass-valve, is arranged, allowing water flow to 17a and 7 when storing heat or to 13b and 19 when circulating via HP. This valve 16 is connected via a bypass line 17 comprising two parts 17a, 17b to valve 13b. This bypass connection 17 comprises a large heat store realized as a water tank 7 in between parts 17a and 17b, that is there is a fluid bypass connection between bypass valve 16 via connection line part 17a to tank 7 and from tank 7 via connecting line part 17b to line 18.

When storing heat hot water flows from valve 16 via line part 17a into heat store 7. When using heat from heat store 7, hot water HW flows from valve 16 via line part 17a to store 7, from store 7 via line part 17b into valve 13b and into line 18. When there is water circulating via the heat pump 1, the water flow is from valve 16 directly to valve 13b (i.e. without using bypass 17a, 7 and 17b) and from there to water line 19 (and through heat pump 1).

Hereinafter, several operating modes and operating states, resp., of the first embodiment are described with respect to Figures 3 to 6. Therein, arrows show the direction of water flowing, wherein "HW" indicates a flow of hot water and "CW" indicates a flow of cold water.

Figure 3 shows a heating state h-s as follows. Hot water HW flows from heat pump 1 (pumped by main pump 10) through three-way-valve 13a into proportional valves 12 and 12' in parallel. These valves 12 and 12' are controlled in such a manner that the total amount (i.e. all amount) of hot water HW flowing through them is conducted into the emitter 3 and the emitter 3', respectively (via flow lines 14 and 14'). In other words, in state h-s, no hot water flows (via lines 8, 8') into PCM 5 and into PCM 5'. Via emitters 3, 3', the hot water HW transfers its heat (energy) into the room 6 and the room 6', so that the low room temperature inside these rooms 6, 6' is gradually increased from low room temperature to higher room temperatures. Consequently, the (formerly hot) water having lost its heat flows, as cold water CW, via lines 14, 14' into proportional valves 12, 12' shown on the right side of Figure 3 and is pumped, by secondary pump 15 and through valve 13b, as cold water back into heat pump 1.

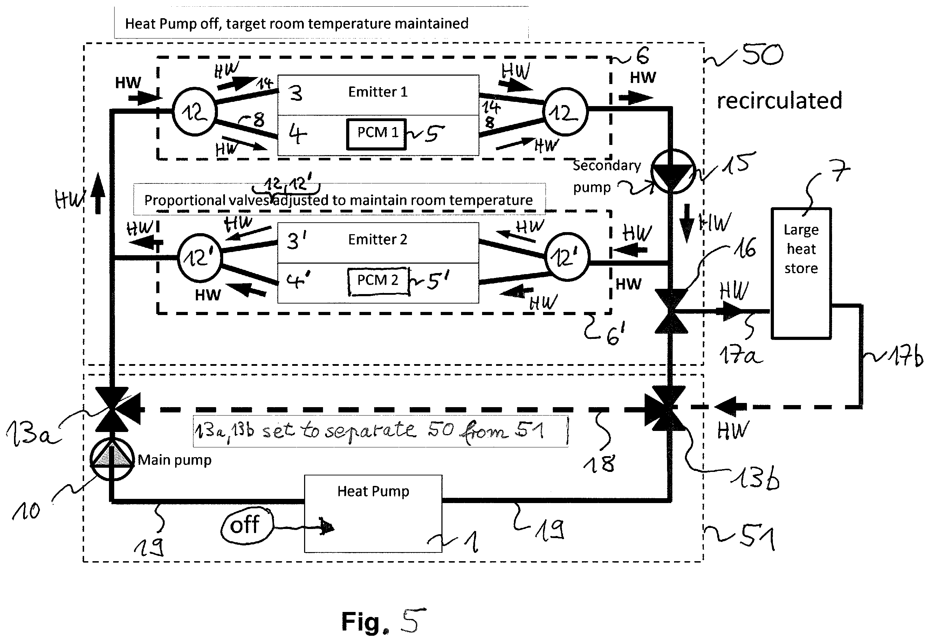

In other words, in the heating state h-s, the heat pump 1 is switched on, the three-way-valves 13a and 13b are set to feed the emitter circuit (shown as 50 in Figure 5). Water flow line 18 is not used (i.e. shut off from the water flow via an adequate setting of valves 13a and 13b), the proportional valves 12 and 12' are set so as to completely feed the emitters 3 and 3' and the low room temperature inside rooms 6 and 6' is gradually increased in order to attain, inside rooms 6 and 6' a predefined target temperature Tₙ which is higher than the present room temperature, at a future point in time. In this heating state h-s, bypass valve 16 only allows a water flow through it coming from the secondary heat pump 15 side (i.e. from valves 12 and 12' on the right side of Fig. 3) and going to valve 13b. That is, the bypass line 17 with its parts 17a, 17b (and therefore also large heat store 7) is disconnected from the water flow (compare Figure 4 for the aforementioned components 7, 16, 17a and 17b).

Figure 4 shows a feed state f-s in form of a state in which heat is fed from heat source/heat pump 1 also into PCM 5 and PCM5' to be stored therein. In principle, the operation is as shown in Figure 3 so that no only the differences between the shown feed state f-s and the heating state h-s as shown in Figure 3 are described: Proportional valves 12, 12' are controlled in a manner such that hot water HW flows out of them into emitters 3, 3' as well as into water/PCM heat exchanger 4, 4' and the PCMs 5, 5' thereof, respectively. The setting is such that more water is flowing, via lines 8, 8' into PCMs 5, 5', than is flowing, via lines 14, 14', into emitters 3, 3'. In the present case, approximately 75 volume-% of the hot water HW is flowing into PCMs 5, 5', whereas only approximately 25 volume-% of the hot water HW flowing out from valves 12, 12' (on the left side of Figure 4) flows into emitters 3, 3'.

That is, in the shown case f-s, the heat pump 1 is on and even if proportional valves 12, 12' (of left side) are also used for feeding the emitters 3, 3', said valves 12, 12' are mainly used to feed water/PCM heat exchangers 4, 4' and the PCMs 5, 5' thereof, respectively. That is, in state f-s, mainly heat is fed from the source 1 into the PCMs 5, 5'. Valves 13a and 13b are set to feed the emitter circuit 50 (compare Figure 5).

According to the aforementioned situations of Figs. 3 and 4, hot water HW is sucked (by pump 10) via line 19 (on the right hand side of Figs. 3 and 4) into heat pump 1, flows through it 1, and is then pumped back (via line 19 on the left hand side of Figs. 3 and 4) into the emitter circuit 50 via main pump 10.

With/during the state shown in Fig. 4, the desired target room temperature Tₙ is practically achieved. After that, it is then an aim to keep this temperature Tₙ inside rooms 6, 6' constant. That is, after having achieved Tₙ, hot water HW still flowing into PCMs 5, 5' (from valves 12, 12' on the left side) has to emit its heat and energy, respectively, somewhere else than into rooms 6, 6' (in order to avoid an overheating of these rooms). In order to achieve this, bypass valve 16 is then used as a three-way-valve as follows. The secondary pump 15 is a booster pump that maintains water flow through the shown circuit. While heat pumps 1 and 15 are still operating and the flow of hot water via line 19 and heat pump 1 still continues for part of the hot water HW, another part of the hot water HW is directed, via valve 16, into bypass 17 to store its heat inside store 7. Later on, most of the hot water HW flowing into valve 16 is conducted by bypass 17a into heat store 7, and finally all of the hot water HW is directed via valve 16 into tank 7 in order to be stored therein for later use.

Beyond that: In a state when Tₙ is already achieved in 6 and 6', heat being already pre-stored inside PCMs 5, 5' is released too according to Fig. 4. This heat released by PCMs 5, 5' can then also be conducted into heat store 7 in order to avoid an overheating of spaces 6 and 6'. That is, Figure 4 does not only show a feed state f-s storing heat inside PCMs 5, 5', but also a transport state t-s, in which part of a heat (energy) that is emitted from PCMs 5, 5' is emitted into a space 7 (i.e. heat store 7) differing from the space being constituted by rooms 6, 6'.

In order to keep the room temperature inside rooms 6, 6' constant over a longer time, i.e. to maintain the target room temperature Tₙ inside rooms 6, 6' constant, the operation shown in Figure 5 is used. This operation can be seen as an emission state e-s being a state in which heat stored in the PCMs 5, 5' is emitted into rooms 6, 6' while at the same time in an emission state of the heat store 7 heat (i.e. hot water HW) is conducted via bypass line part 17b and water line 18 into emitter circuit 50.

Specifically, in the operation according to Figure 5, heat pump 1 is shut off and the heat pump circuit 51 (that is, pump 10 and heat pump 1) is disconnected from the emitter circuit 50. In order to achieve this, valves 13a and 13b are set so as to allow a fluid connection between valves 12, 12' shown on the right side of Figure 5 and the valves 12, 12' shown on the left side of Figure 5 via fluid line 18. In other words, a re-circulated water flow in emitter circuit 50 is established in the following manner. Hot water HW flowing out from valve 12 shown on the right side is pumped, by secondary pump 15, into valve 12' shown on the right side. Only a small fraction of this water HW flows through emitter 3' in order to emit some heat into room 6'. Most of the water flowing out of valve 12' shown on the right flows through PCM 5' in order to take up heat from this PCM.

That is, in Figure 5, there is the following operating situation.

In room 6, the temperature has presently dropped slightly below the desired temperature Tₙ, whereas in room 6', the temperature is still Tₙ. Consequently, heat emitted by PCM 5' flows through valve 12' shown on the left side and is re-circulated into room 6, i.e. into valve 12 shown on the left side. Because inside room 6', temperature is still Tₙ (as desired), the two proportional valves 12' are set so as to let most of the water (for example approximately 90% of the water volume) flow through water/PCM heat exchanger 4' and its PCM 5', respectively (whereas only a small amount of water flowing through emitting mechanism 2' flows through emitter 3', here for example 10 vol-%). As inside room 6, temperature has already dropped slightly below Tₙ, the proportional valves 12 are set so as to let most of the re-circulated water flow through emitter 3 to emit heat into room 6 (and only a small part of water flows through water/PCM heat exchanger 4 and its PCM 5, respectively). Consequently, via the hot water HW flowing through line 14, i.e. flowing through emitter 3, room 6 is heated (in order to achieve again Tₙ) based on heat coming from PCM 5' inside room 6'.

Also, according to Fig. 5, as heat from the heat store 7 is used, hot water HW flows via bypass line part 17b, valve 13b, water line 18 and valve 13a (see dotted line) into the emitter circuit 50.

This re-circulating status of emitter circuit 50 is maintained based on operation of secondary pump 15: Hot water HW is re-circulated through components 3, 4 (with 5), 3' and 4' (with 5') based on an operation of components 12, 12' and 15 in emitter circuit 50, while concurrently heat pump circuit 51 is disconnected via valves 13a and 13b and heat pump 1 and main pump 10 are not operating.

This leads to the desired balance in temperature so that the temperature inside rooms 6 and 6' can be maintained more or less to the desired value of Tₙ. (In Figure 5, as temperature has slightly dropped in room 6, whereas in room 6' there the temperature is still at level Tₙ, water from PCM 5' is passed through emitter 3 to achieve Tₙ so that heat from PCM 5' to drawn back to emitter 3 in room 6.)

The reverse is also possible: If, in room 6', temperature T drops slightly below the desired temperature Tₙ, whereas in room 6, the temperature is still Tₙ, water is passed through emitter 3' to re-achieve Tₙ in room 6' and through PCM 5 to draw heat back to emitter 3' inside room 6'. (With time running, the water in emitter circuit 50 would cool down, therefore, the heat from PCMs 5, 5' is moved around to heat the rooms 6 and 6'.)

In addition, heat can also be drawn from heat store 7 into emitter circuit 50 in order to support keeping the target room temperature inside rooms 6, 6' to the desired level Tₙ as follows. Part of the water being circulated in emitter circuit 50 is conducted, via valve 16 and bypass circuit part 17a, through heat store 7. In store 7, water from heat store 7 (which is hot water HW that has been stored before in heat store 7, compare Figure 4) is added to the water flowing inside store 7. Consequently, the total amount of water flowing out from store 7 is hotter, that is, has taken up additional heat. This total amount is then conducted, via bypass line part 17b and via the two valves 13a and 13b, back into emitter circuit 50. Consequently, also (small portions of) heat being extracted from store 7 are introduced into emitter circuit 50 being in the re-circulated state so as to help maintaining target room temperature inside rooms 6 and 6' to the level of Tₙ.

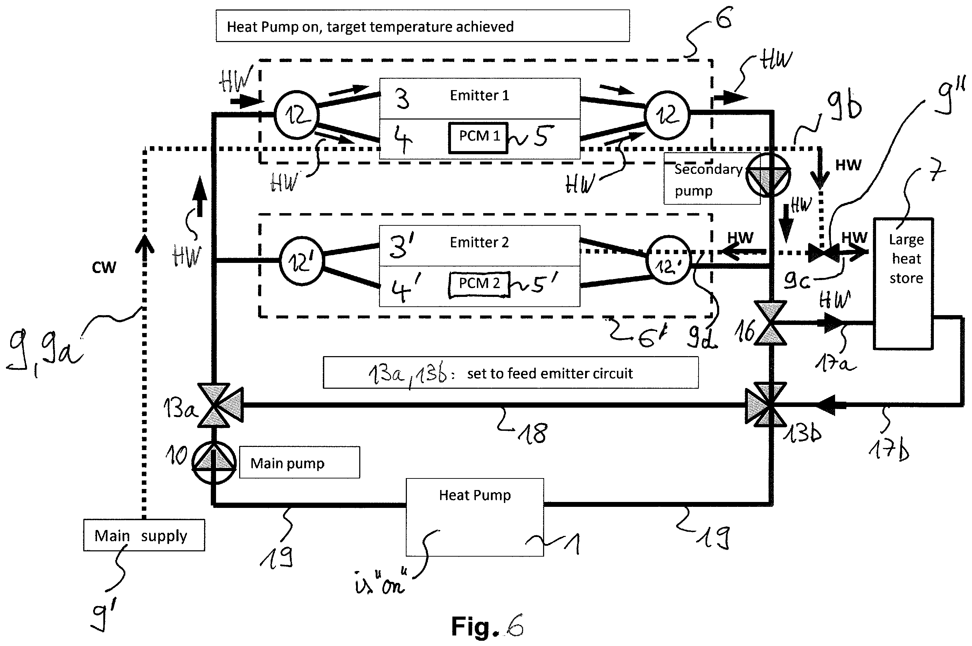

In Figure 6, for clarity reasons, not all reference signs have been provided (the same holds for the second embodiment of Figure 8 which is described below). Figure 6 shows, in an alternative configuration of the first embodiment (having, in addition to the configuration shown in Figs. 3 to 5, a totally separate cold water, CW, line 9, with line parts 9a to 9d, see dotted line) a state as follows.

The totally separate cold water line 9 is used to take heat from PCM 5 either to the heat store 7 or to the emitter 5', as required. In line 9, cold water, CW, can flow from a main supply 9' (such as a tap water-connection of the building) through line part 9a directly into PCM 5 (that is, without flowing through valves 12, 12' and 13). In PCM 5, the CW takes up heat and becomes hot water HW, the latter then flowing out from PCM 5 into line part 9b. Dependent upon the switching state of valve 9" (which connects line part 9b to line parts 9c and 9d), the HW then either flows, via line part 9c, into heat store 7, or, via line part 9d, into emitter 3'.

In the alternative of the first embodiment shown in Fig 6, the heat pump 1 is on and only suppling emitter 3. The target room temperature Tₙ is achieved, and now room 6 is potentially overheating. In order to avoid this, the main supply is switched on to let cold water, CW, flow through line part 9a into PCM 5 (where it takes up heat from PCM 5). The water comes out hot from PCM 5 and flows through emitter 3' (if heat is needed in room 6') or into heat store 7 (if heat shall be stored therein for later use).

Figure 7 shows three different concepts how PCM 5 and PCM5' can be realized.

According to all three alternatives I to iii shown in Figure 7, the surface area is maximized for optimized heat transfer between the PCM and the transport fluid (normally: water).

According to alternatives i and ii, spiral tubes 8-1 and 8-2, resp., are employed for letting the transport fluid flow through the phase change material 5-1 and 5-2, respectively. In these alternatives i and ii, the phase change material itself is not in the form of encapsulated beads, but in the form of a porous thermal composite, for example, or in it's pure form.

In the alternative iii, the phase change material 5-3 is realized in an encapsulated bead form in a phase change slurry. In this case, two parallel fluid lines 8-3 are realized as straight lines running directly through PCM 5-3. Alternatively, the fluid lines can be connected to the surface of PCM 5-3.

The second embodiment shown in Fig 8 is, in principle, realized as the alternative of the first embodiment shown in Fig. 6 and also operates, in principle, like the alternative of the first embodiment shown in Fig. 6. Thus, only the differences between Fig. 6 and Fig. 8 are described hereinafter.

Also Fig. 8 shows a case of an independent cold water supply via use of a totally separate cold water line 9. However, in Fig. 8, both emitters 3 and 3' and both PCMs 5 and 5' are heated up while the heat pump 1 is on. When the desired room temperature Tₙ is achieved, cold water line 9 is used (that is, main supply 9' for CW is switched on) to take, via CW flowing through line 9 (which is guided, with two separate line parts, through PCM 5 as well as through PCM 5'), heat from PCM 5 and PCM 5' in rooms 6 and 6' to the PCM battery 9‴. In battery 9‴, this heat can be stored for later use.

According to Figure 8, PCM battery 9‴ can be used for utility services such as for example washing machines, warm water cleaning or can be used as a preheater which is adapted to heat the water prior to the heating of it in the heat pump cycle/circuit 51 (please see Figure 5).

## Claims

1. Heating system with a heat source (1) and a heat emitting mechanism (2) for heating a first space (6) and a second space (6', 7) that is different from the first space (6),
wherein the heat emitting mechanism (2) comprises a heat-transfer-medium/air heat exchanger (3) and a heat storage and release mechanism (4), wherein with the heat-transfer-medium/air heat exchanger (3) heat can be transferred from a heat-transfer-medium to air and vice versa,
wherein the heat storage and release mechanism (4) has a phase change material (5), the latter hereinafter being abbreviated as PCM (5), and the heat storage and release mechanism (4) is configured as a heat-transfer-medium/PCM heat exchanger, wherein with the heat-transfer-medium/PCM heat exchanger heat can be transferred from the heat-transfer-medium to a PCM and vice versa, and
wherein the heating system, preferably the heat storage and release mechanism (4) thereof, is configured for being controlled to change between
• a feed state (f-s) being a state in which heat fed from the heat source (1) is stored in the PCM (5),
• an emission state (e-s) being a state in which heat stored in the PCM (5) is emitted into the first space (6) when the heat storage and release mechanism (4) is located in the first space (6),
and
• a transport state (t-s) being a state in which not all of the heat being released by the PCM (5) is emitted into the first space (6), but at least part of the heat being released by the PCM (5) is emitted into the second space (6', 7) differing from the first space (6), preferably the transport state (t-s) being a state in which an emission of heat being released by the PCM (5) into the first space (6) is prevented by means of conveying the heat being released by the PCM (5) into the second space (6', 7) differing from the first space (6).

2. Heating system according to the preceding claim
***characterized in that***
the heating system can be controlled so as to be changed between at least one of, preferably between each one of, the feed state (f-s), the emission state (e-s) and/or the transport state (t-s), on the one hand, and a heating state (h-s) being a state in which heat from the heat source (1) is fed to the heat-transfer-medium/air heat exchanger (3) in order to heat the air of the first space (6).

3. Heating system according to the preceding claim
***characterized in that***
the heating system can be controlled so as to be changed from the heating state (h-s) to the feed state (f-s) if a predefined fraction of a predefined target temperature, Tₙ, is attained in the first space (6),
preferably said fraction being 90%, 95%, 98% or 99% of the predefined target temperature Tₙ.

4. Heating system according to one of the preceding claims
***characterized in that***
the heating system can be controlled so as to be changed from the emission state (e-s) to the transport state (t-s) if a predefined multiple of a predefined target temperature, Tₙ, is exceeded in the first space (6),
preferably said multiple being 110%, 105%, 102% or 101% of the predefined target temperature, Tₙ.

5. Heating system according to one of the preceding claims
***characterized by***
a heat-transfer-medium line (8) disposed so as to transfer heat from the PCM (5) to a heat-transfer-medium being conveyed inside it (8) in case of said heat-transfer-medium having a lower temperature than the PCM (5) and to transfer heat from a heat-transfer-medium being conveyed inside it (8) to the PCM (5) a in case of said heat-transfer-medium having a higher temperature than the PCM (5),
preferably said heat-transfer-medium line (8) being, at least in sections, wound around the PCM (5), arranged on a surface of the PCM (5), and/or passing through the PCM (5).

6. Heating system according to the preceding claim
***characterized by***
a fluid connection that is provided between the heat-transfer-medium line (8) and the heat source (1).

7. Heating system according to one of the preceding claims
***characterized in that***
the heating system can be changed, preferably can be switched, from a state in which the heat emitting mechanism (2) is fluid-connected with the heat source (1) to a state in which the fluid-connection between the heat emitting mechanism (2) and the heat source (1) is disconnected and vice versa.

8. Heating system according to one of the preceding claims
***characterized in that***
the heat emitting mechanism (2) further comprises an air-conveying-device (11), preferably a fan or a radiator.

9. Heating system according to the preceding claim
***characterized in that***
the phase change material (5) of the heat storage and release mechanism (4) is, at least in sections, arranged in the interior of the air-conveying-device (11).

10. Heating system according to one of the preceding claims
***characterized by***
a flow ratio control unit (12), preferably a proportional valve, being adapted to control the ratio of heat-transfer-medium being fed to the heat-transfer-medium/air heat exchanger (3) and of heat-transfer-medium being fed to the heat storage and release mechanism (4).

11. Heating system according to one of the preceding claims
***characterized in that***
the heat source (1) comprises or is a heat pump.

12. Heating system according to one of the preceding claims
***characterized in that***
the heat-transfer-medium/air heat exchanger (3) and the heat storage and release mechanism (4) are fluid-connected in parallel.

13. Heating system according to one of the preceding claims
***characterized by***
several heat emitting mechanisms (2, 2'),
wherein each heat emitting mechanism (2, 2') comprises a heat-transfer-medium/air heat exchanger (3, 3') and a heat storage and release mechanism (4, 4') in such a manner that the respective heat-transfer-medium/air heat exchanger (3, 3') and the respective heat storage and release mechanism (4, 4') are fluid-connected in parallel, and
wherein the several heat emitting mechanisms (2, 2') are either fluid-connected in parallel or fluid-connected in series.

14. Heating system according to one of the preceding claims ***characterized by***
the PCM (5) comprising or being
• a salt hydrate, especially calcium chloride or sodium acetate, wherein advantageously the emitter contains a protective coating so as to avoid corrosion and/or encapsulated propylene glycol, sodium nitrate or potassium nitrate,
• a PCM with phase transition between 0° Celsius and 50° Celsius,
and/or
• a metal matrix composite, preferably utilising copper or aluminium, with preferably a thermal conductivity of ≥ 35 W/m°K, preferably of ≥ 50 W/m°K.

15. Heating method using a heating system according to one of the preceding claims, that is
a heating system with a heat source (1) and a heat emitting mechanism (2), wherein the heat emitting mechanism (2) comprises a heat-transfer-medium/air heat exchanger (3) and a heat storage and release mechanism (4), wherein with the heat-transfer-medium/air heat exchanger (3) heat can be transferred from a heat-transfer-medium to air and vice versa, and wherein the heat storage and release mechanism (4) has a phase change material (5), the latter hereinafter being abbreviated as PCM (5), and the heat storage and release mechanism (4) is configured as a heat-transfer-medium/PCM heat exchanger, wherein with the heat-transfer-medium/PCM heat exchanger heat can be transferred from the heat-transfer-medium to a PCM and vice versa,
***characterized in that***
wherein the heating system, preferably the heat storage and release mechanism (4) thereof, is controlled so as to be changed between
• a feed state (f-s) being a state in which heat fed from the heat source (1) is stored in the PCM (5),
• an emission state (e-s) being a state in which heat stored in the PCM (5) is emitted into a first space (6) within which the heat storage and release mechanism (4) is located,
and
• a transport state (t-s) being a state in which not all of the heat being released by the PCM (5) is emitted into the first space (6), but at least part of the heat being released by the PCM (5) is emitted into a second space (6', 7) differing from the first space (6), preferably the transport state (t-s) being a state in which an emission of heat being released by the PCM (5) into the first space (6) is prevented by means of conveying the heat being released by the PCM (5) into the second space (6', 7) differing from the first space (6).

## Patentansprüche

1. Heizsystem mit einer Wärmequelle (1) und einem Wärmeabgabemechanismus (2) zum Erwärmen eines ersten Bereichs (6) und eines zweiten Bereichs (6', 7), der von dem ersten Bereich (6) verschieden ist,
wobei der Wärmeabgabemechanismus (2) einen Wärmetransfermedium/Luft-Wärmetauscher (3) und einen Wärmespeicher- und -freigabemechanismus (4) umfasst, wobei mit dem Wärmetransfermedium/Luft-Wärmetauscher (3) Wärme von einem Wärmetransfermedium auf Luft und umgekehrt transferiert werden kann,
wobei der Wärmespeicher- und -freigabemechanismus (4) ein Phasenwechselmaterial (5) aufweist, das im Folgenden mit PCM (engl. phase change material) (5) abgekürzt wird, und der Wärmespeicher- und -freigabemechanismus (4) als Wärmetransfermedium/PCM-Wärmetauscher ausgebildet ist, wobei mit dem Wärmetransfermedium/PCM-Wärmetauscher Wärme von dem Wärmetransfermedium auf ein PCM und umgekehrt transferiert werden kann, und
wobei das Heizsystem, vorzugsweise der Wärmespeicher- und - freigabemechanismus (4) davon, eingerichtet ist, gesteuert zu werden zum Wechseln zwischen
• einem Einspeisezustand (f-s), der ein Zustand ist, in dem von der Wärmequelle (1) eingespeiste Wärme in dem PCM (5) gespeichert wird,
• einem Abgabezustand (e-s), der ein Zustand ist, in dem in dem PCM (5) gespeicherte Wärme in den ersten Bereich (6) abgegeben wird, wenn sich der Wärmespeicher- und - freigabemechanismus (4) in dem ersten Bereich (6) befindet, und
• einem Transportzustand (t-s), der ein Zustand ist, in dem nicht die gesamte von dem PCM (5) freigegebene Wärme in den ersten Bereich (6) abgegeben wird, sondern zumindest ein Teil der von dem PCM (5) freigegebenen Wärme in den zweiten Bereich (6', 7), der sich von dem ersten Bereich (6) unterscheidet, abgegeben wird, wobei vorzugsweise der Transportzustand (t-s) ein Zustand ist, in dem eine Abgabe von durch das PCM (5) freigegebener Wärme in den ersten Bereich (6) verhindert wird, indem die durch das PCM (5) freigegebene Wärme in den zweiten, vom ersten Bereich (6) verschiedenen Bereich (6', 7) geleitet wird.

2. Heizsystem nach dem vorangehenden Anspruch,
***dadurch gekennzeichnet, dass***
das Heizsystem so gesteuert werden kann, dass es zwischen mindestens einem, vorzugsweise zwischen jedem, der Zustände Einspeisezustand (f-s), Abgabezustand (e-s) und/oder Transportzustand (t-s) einerseits und einem Erwärmungszustand (h-s), der ein Zustand ist, in dem Wärme von der Wärmequelle (1) dem Wärmetransfermedium/Luft-Wärmetauscher (3) zugeführt wird, um die Luft des ersten Bereichs (6) zu erwärmen, andererseits gewechselt werden kann.

3. Heizsystem nach dem vorangehenden Anspruch,
***dadurch gekennzeichnet, dass***
das Heizsystem so gesteuert werden kann, dass vom Erwärmungszustand (h-s) in den Einspeisezustand (f-s) gewechselt wird, wenn im ersten Bereich (6) ein vordefinierter Anteil einer vordefinierten Zieltemperatur, Tₙ, erreicht wird,
wobei vorzugsweise dieser Anteil 90 %, 95 %, 98 % oder 99 % der vordefinierten Zieltemperatur Tₙ beträgt.

4. Heizsystem nach einem der vorangehenden Ansprüche,
***dadurch gekennzeichnet, dass***
das Heizsystem so gesteuert werden kann, dass vom Abgabezustand (e-s) in den Transportzustand (t-s) gewechselt wird, wenn im ersten Bereich (6) ein vordefiniertes Vielfaches einer vordefinierten Zieltemperatur, Tₙ, überschritten wird,
wobei vorzugsweise dieses Vielfache 110 %, 105 %, 102 % oder 101 % der vordefinierten Zieltemperatur Tₙ beträgt.

5. Heizsystem nach einem der vorangehenden Ansprüche,
***gekennzeichnet durch***
eine Wärmetransfermediumleitung (8), die angeordnet ist, um Wärme vom PCM (5) an ein Wärmetransfermedium, das darin (8) geleitet wird, zu transferieren, in einem Fall, in dem das Wärmetransfermedium eine niedrigere Temperatur als das PCM (5) aufweist, und um Wärme von einem Wärmetransfermedium, das darin (8) geleitet wird, an das PCM (5) zu transferieren, in einem Fall, in dem das Wärmetransfermedium eine höhere Temperatur als das PCM (5) aufweist,
wobei vorzugsweise die Wärmetransfermediumleitung (8) zumindest abschnittsweise um das PCM (5) gewickelt, auf einer Fläche des PCM (5) angeordnet und/oder **durch** das PCM (5) hindurchgeführt wird.

6. Heizsystem nach dem vorangehenden Anspruch,
***gekennzeichnet durch***
eine Fluidverbindung, die zwischen der Wärmetransfermediumleitung (8) und der Wärmequelle (1) vorgesehen ist.

7. Heizsystem nach einem der vorangehenden Ansprüche,
***dadurch gekennzeichnet, dass***
das Heizsystem von einem Zustand, in dem der Wärmeabgabemechanismus (2) mit der Wärmequelle (1) fluidverbunden ist, in einen Zustand, in dem die Fluidverbindung zwischen dem Wärmeabgabemechanismus (2) und der Wärmequelle (1) unterbrochen ist, und umgekehrt, gewechselt werden kann, vorzugsweise umgeschaltet werden kann.

8. Heizsystem nach einem der vorangehenden Ansprüche,
***dadurch gekennzeichnet, dass***
der Wärmeabgabemechanismus (2) ferner eine Luftfördereinrichtung (11), vorzugsweise einen Lüfter oder einen Strahler umfasst.

9. Heizsystem nach dem vorangehenden Anspruch,
***dadurch gekennzeichnet, dass***
das Phasenwechselmaterial (5) des Wärmespeicher- und - freigabemechanismus (4) zumindest abschnittsweise im Inneren der Luftfördereinrichtung (11) angeordnet ist.

10. Heizsystem nach einem der vorangehenden Ansprüche,
***gekennzeichnet durch***
eine Strömunganteilsteuereinheit (12), vorzugsweise ein Proportionalventil, die ausgelegt ist, den Anteil von Wärmetransfermedium, das dem Wärmetransfermedium/Luft-Wärmetauscher (3) zugeführt wird, und von Wärmetransfermedium, das dem Wärmespeicher- und -freigabemechanismus (4) zugeführt wird, zu steuern.

11. Heizsystem nach einem der vorangehenden Ansprüche,
***dadurch gekennzeichnet, dass***
die Wärmequelle (1) eine Wärmepumpe umfasst oder ist.

12. Heizsystem nach einem der vorangehenden Ansprüche,
***dadurch gekennzeichnet, dass***
der Wärmetransfermedium/Luft-Wärmetauscher (3) und der Wärmespeicher- und -freigabemechanismus (4) parallel fluidverbunden sind.

13. Heizsystem nach einem der vorangehenden Ansprüche,
***gekennzeichnet durch***
mehrere Wärmeabgabemechanismen (2, 2'),
wobei jeder Wärmeabgabemechanismus (2, 2') einen Wärmetransfermedium/Luft-Wärmetauscher (3, 3') und einen Wärmespeicher- und -freigabemechanismus (4, 4') in einer Weise umfasst, dass der jeweilige Wärmetransfermedium/Luft-Wärmetauscher (3, 3') und der jeweilige Wärmespeicher- und - freigabemechanismus (4, 4') parallel fluidverbunden sind, und
wobei die mehreren Wärmeabgabemechanismen (2, 2') entweder parallel fluidverbunden oder in Reihe fluidverbunden sind.

14. Heizsystem nach einem der vorangehenden Ansprüche,
***gekennzeichnet dadurch***
• **dass** das PCM (5) Folgendes umfasst oder ist:
• ein Salzhydrat, insbesondere Calciumchlorid oder Natriumacetat, wobei der Emitter vorteilhafterweise eine Schutzschicht zur Vermeidung von Korrosion und/oder eingekapseltes Propylenglykol, Natriumnitrat oder Kaliumnitrat enthält,
ein PCM mit einem Phasenübergang zwischen 0° Celsius und 50° Celsius,
und/oder
• einen Metallmatrix-Verbundwerkstoff, vorzugsweise unter Verwendung von Kupfer oder Aluminium, mit vorzugsweise einer Wärmeleitfähigkeit von ≥ 35 W/m°K, vorzugsweise von ≥ 50 W/m°K.

15. Erwärmungsverfahren unter Verwendung eines Heizsystems nach einem der vorangehenden Ansprüche, das heißt
ein Heizsystem mit einer Wärmequelle (1) und einem Wärmeabgabemechanismus (2), wobei der Wärmeabgabemechanismus (2) einen Wärmetransfermedium/Luft-Wärmetauscher (3) und einen Wärmespeicher- und - freigabemechanismus (4) umfasst, wobei mit dem Wärmetransfermedium/Luft-Wärmetauscher (3) Wärme von einem Wärmetransfermedium zu Luft und umgekehrt transferiert werden kann, und wobei der Wärmespeicher- und -freigabemechanismus (4) ein Phasenwechselmaterial (5) aufweist, das im Folgenden mit PCM (5) abgekürzt wird, und der Wärmespeicher- und -freigabemechanismus (4) als Wärmetransfermedium/PCM-Wärmetauscher ausgebildet ist, wobei mit dem Wärmetransfermedium/PCM-Wärmetauscher Wärme vom Wärmetransfermedium auf ein PCM und umgekehrt transferiert werden kann,
***dadurch gekennzeichnet, dass***
wobei das Heizsystem, vorzugsweise der Wärmespeicher- und - freigabemechanismus (4) davon, gesteuert wird zum Wechseln zwischen
• einem Einspeisezustand (f-s), der ein Zustand ist, in dem von der Wärmequelle (1) eingespeiste Wärme in dem PCM (5) gespeichert wird,
• einem Abgabezustand (e-s), der ein Zustand ist, in dem in dem PCM (5) gespeicherte Wärme in einen ersten Bereich (6) abgegeben wird, in dem sich der Wärmespeicher- und - freigabemechanismus (4) befindet,
und
• einem Transportzustand (t-s), der ein Zustand ist, in dem nicht die gesamte von dem PCM (5) freigegebene Wärme in den ersten Bereich (6) abgegeben wird, sondern zumindest ein Teil der von dem PCM (5) freigegebenen Wärme in einen zweiten Bereich (6', 7), der sich von dem ersten Bereich (6) unterscheidet, abgegeben wird, wobei vorzugsweise der Transportzustand (t-s) ein Zustand ist, in dem eine Abgabe von durch das PCM (5) freigegebener Wärme in den ersten Bereich (6) verhindert wird, indem die durch das PCM (5) freigegebene Wärme in den zweiten, vom ersten Bereich (6) verschiedenen Bereich (6', 7) geleitet wird.

## Revendications

1. Système de chauffage avec une source de chaleur (1) et un mécanisme d'émission de chaleur (2) pour chauffer un premier espace (6) et un second espace (6', 7) qui est différent du premier espace (6),
dans lequel le mécanisme d'émission de chaleur (2) comprend un échangeur de chaleur fluide caloporteur/air (3) et un mécanisme de stockage et de libération de chaleur (4), dans lequel à l'aide de l'échangeur de chaleur fluide caloporteur/air (3) la chaleur peut être transférée d'un fluide caloporteur à l'air et vice-versa,
dans lequel le mécanisme de stockage et de libération de chaleur (4) comporte un matériau à changement de phase (5), ce dernier étant ci-après désigné par l'abréviation MCP (5), et le mécanisme de stockage et de libération de chaleur (4) est configuré comme un échangeur de chaleur fluide caloporteur/MCP, dans lequel à l'aide de l'échangeur de chaleur fluide caloporteur/MCP la chaleur peut être transférée du fluide caloporteur à un MCP et vice versa, et
dans lequel le système de chauffage, de préférence le mécanisme de stockage et de libération de chaleur (4) de celui-ci, est configuré pour être commandé de manière à commuter entre
• un état d'alimentation (f-s), étant un état dans lequel la chaleur fournie par la source de chaleur (1) est stockée dans le MCP (5),
• un état d'émission (e-s), étant un état dans lequel la chaleur stockée dans le MCP (5) est émise dans le premier espace (6) lorsque le mécanisme de stockage et de libération de chaleur (4) est situé dans le premier espace (6), et
• un état de transport (t-s), étant un état dans lequel toute la chaleur libérée par le MCP (5) n'est pas émise dans le premier espace (6), mais au moins une partie de la chaleur libérée par le MCP (5) est émise dans le second espace (6', 7) différent du premier espace (6), de préférence l'état de transport (t-s) étant un état dans lequel une émission de chaleur libérée par le MCP (5) dans le premier espace (6) est empêchée au moyen du transport de la chaleur libérée par le MCP (5) dans le second espace (6', 7) différent du premier espace (6).

2. Système de chauffage selon la revendication précédente
***caractérisé en ce que***
le système de chauffage peut être commandé de manière à commuter entre au moins l'un, de préférence entre chacun, de l'état d'alimentation (f-s), l'état d'émission (e-s) et/ou l'état de transport (t-s), d'une part, et d'un état de chauffage (h-s), étant un état dans lequel la chaleur provenant de la source de chaleur (1) est transmise à l'échangeur de chaleur fluide caloporteur/air (3) afin de chauffer l'air du premier espace (6), d'autre part.

3. Système de chauffage selon la revendication précédente
***caractérisé en ce que***
le système de chauffage peut être commandé de manière à passer de l'état de chauffage (h-s) à l'état d'alimentation (f-s) si une fraction prédéfinie d'une température cible prédéfinie, Tₙ, est atteinte dans le premier espace (6),
de préférence, ladite fraction représentant 90 %, 95 %, 98 % ou 99 % de la température cible prédéfinie Tₙ.

4. Système de chauffage selon l'une des revendications précédentes
***caractérisé en ce que***
le système de chauffage peut être commandé de manière à passer de l'état d'émission (e-s) à l'état de transport (t-s) si un multiple prédéfini d'une température cible prédéfinie, Tₙ, est dépassé dans le premier espace (6),
de préférence, ledit multiple étant égal à 110 %, 105 %, 102 % ou 101 % de la température cible prédéfinie, Tₙ.

5. Système de chauffage selon l'une des revendications précédentes ***caractérisé par***
une conduite de fluide caloporteur (8) disposée de manière à transférer la chaleur du MCP (5) à un fluide caloporteur transporté dans celle-ci (8) dans le cas où ledit fluide caloporteur a une température inférieure à celle du MCP (5) et à transférer la chaleur d'un fluide caloporteur transporté dans celle-ci (8) au MCP (5) dans un cas où ledit fluide caloporteur a une température supérieure à celle du MCP (5),
de préférence, ladite conduite de fluide caloporteur (8) étant, au moins par sections, enroulée autour du MCP (5), agencée sur une surface du MCP (5) et/ou traversant le MCP (5).

6. Système de chauffage selon la revendication précédente
***caractérisé par***
une connexion fluidique assurée entre la conduite de fluide caloporteur (8) et la source de chaleur (1).

7. Système de chauffage selon l'une des revendications précédentes
***caractérisé en ce que***
le système de chauffage peut être modifié, de préférence peut être commuté, d'un état dans lequel le mécanisme d'émission de chaleur (2) est connecté fluidiquement à la source de chaleur (1) à un état dans lequel la connexion fluidique entre le mécanisme d'émission de chaleur (2) et la source de chaleur (1) est déconnectée et vice versa.

8. Système de chauffage selon l'une des revendications précédentes
***caractérisé en ce que***
le mécanisme d'émission de chaleur (2) comprend en outre un dispositif de transport d'air (11), de préférence un ventilateur ou un radiateur.

9. Système de chauffage selon la revendication précédente
***caractérisé en ce que***
le matériau à changement de phase (5) du mécanisme de stockage et de libération de chaleur (4) est, au moins par sections, agencé à l'intérieur du dispositif de transport d'air (11).

10. Système de chauffage selon l'une des revendications précédentes
***caractérisé par***
une unité de commande de rapport de débit (12), de préférence une vanne proportionnelle, apte à commander le rapport entre le fluide caloporteur alimentant l'échangeur de chaleur fluide caloporteur/air (3) et le fluide caloporteur alimentant le mécanisme de stockage et de libération de chaleur (4).

11. Système de chauffage selon l'une des revendications précédentes
***caractérisé en ce que***
la source de chaleur (1) comprend ou est une pompe à chaleur.

12. Système de chauffage selon l'une des revendications précédentes
***caractérisé en ce que***
l'échangeur de chaleur fluide caloporteur/air (3) et le mécanisme de stockage et de libération de chaleur (4) sont connectés fluidiquement en parallèle.

13. Système de chauffage selon l'une des revendications précédentes
***caractérisé par***
plusieurs mécanismes d'émission de chaleur (2, 2'),
dans lequel chaque mécanisme d'émission de chaleur (2, 2') comprend un échangeur de chaleur fluide caloporteur/air (3, 3') et un mécanisme de stockage et de libération de chaleur (4, 4') de sorte que l'échangeur de chaleur fluide caloporteur/air (3, 3') respectif et le mécanisme de stockage et de libération de chaleur (4, 4') respectif sont connectés fluidiquement en parallèle, et
dans lequel les différents mécanismes d'émission de chaleur (2, 2') sont soit connectés fluidiquement en parallèle, soit connectés fluidiquement en série.

14. Système de chauffage selon l'une des revendications précédentes ***caractérisé par***
• le MCP (5) comprenant ou étant
• un hydrate de sel, en particulier du chlorure de calcium ou de l'acétate de sodium, dans lequel l'émetteur contient avantageusement une couche protectrice afin d'éviter la corrosion et/ou du propylène glycol encapsulé, du nitrate de sodium ou du nitrate de potassium,
un MCP avec une transition de phase entre 0 °Celsius et 50 °Celsius,
et/ou
• un composite à matrice métallique, utilisant de préférence du cuivre ou de l'aluminium, avec, de préférence, une conductivité thermique ≥ 35 W/m.K, de préférence ≥ 50 W/m.K.

15. Procédé de chauffage utilisant un système de chauffage selon l'une des revendications précédentes, à savoir
un système de chauffage avec une source de chaleur (1) et un mécanisme d'émission de chaleur (2), dans lequel le mécanisme d'émission de chaleur (2) comprend un échangeur de chaleur fluide caloporteur/air (3) et un mécanisme de stockage et de libération de chaleur (4), dans lequel à l'aide de l'échangeur de chaleur fluide caloporteur/air (3), la chaleur peut être transférée d'un fluide caloporteur à l'air et vice-versa, et dans lequel le mécanisme de stockage et de libération de chaleur (4) comporte un matériau à changement de phase (5), ce dernier étant ci-après désigné par l'abréviation MCP (5), et le mécanisme de stockage et de libération de chaleur (4) est configuré comme un échangeur de chaleur fluide caloporteur/MCP, dans lequel à l'aide de l'échangeur de chaleur fluide caloporteur/MCP, la chaleur peut être transférée du fluide caloporteur à un MCP et vice versa,
***caractérisé en ce que***
dans lequel le système de chauffage, de préférence le mécanisme de stockage et de libération de chaleur (4) de celui-ci, est commandé de manière à commuter entre
• un état d'alimentation (f-s), étant un état dans lequel la chaleur fournie par la source de chaleur (1) est stockée dans le MCP (5),
• un état d'émission (e-s) étant un état dans lequel la chaleur stockée dans le MCP (5) est émise dans le premier espace (6) dans lequel le mécanisme de stockage et de libération de chaleur (4) est situé,
et
• un état de transport (t-s) étant un état dans lequel toute la chaleur libérée par le MCP (5) n'est pas émise dans le premier espace (6), mais au moins une partie de la chaleur libérée par le MCP (5) est émise dans un second espace (6', 7) différent du premier espace (6), de préférence l'état de transport (t-s) étant un état dans lequel une émission de chaleur libérée par le MCP (5) dans le premier espace (6) est empêchée au moyen du transport de la chaleur libérée par le MCP (5) dans le second espace (6', 7) différent du premier espace (6).
